# EUROPÄISCHE PATENTSCHRIFT

(11) **EP 3 550 007 B1**
(45) Veröffentlichungstag und Bekanntmachung des Hinweises auf die Patenterteilung: **27.10.2021**
(21) Anmeldenummer: 18165481.5
(22) Anmeldetag: 03.04.2018
(51) Int. Cl.: C12C 12/04

(54) **VERFAHREN ZUR ENTFERNUNG VON ETHANOL AUS EINEM ALKOHOLHALTIGEN GÄRPRODUKT**
METHOD FOR SEPARATING ETHANOL FROM AN ALCOHOLIC FERMENTATION PRODUCT
PROCÉDÉ D'ÉLIMINATION DE L'ÉTHANOL D'UN PRODUIT DE FERMENTATION ALCOOLIQUE

(43) Veröffentlichungstag der Anmeldung: 09.10.2019
(73) Patentinhaber: Versuchs- und Lehranstalt für Brauerei in Berlin e.V., 13353 Berlin (DE)
(72) Erfinder: Malchow, Stefanie, 10409 Berlin (DE); Hageböck, Martin, 14974 Ludwigsfelde (DE); Senz, Martin, 12107 Berlin (DE); Stahl, Ulf, 14109 Berlin (DE)
(74) Vertreter: Hoppe, Georg Johannes

(56) Entgegenhaltungen:
- WO-A1-2017/115156
- CH-A5- 602 025
- A. CONTRERAS ET AL: "Evaluation of Non-Saccharomyces Yeasts for the Reduction of Alcohol Content in Wine", APPLIED AND ENVIRONMENTAL MICROBIOLOGY, Bd. 80, Nr. 5, 27. Dezember 2013 (2013-12-27), Seiten 1670-1678, XP055302266, US ISSN: 0099-2240, DOI: 10.1128/AEM.03780-13
- GONZALEZ RAMON ET AL: "Yeast respiration of sugars by non-Saccharomycesyeast species: A promising and barely explored approach to lowering alcohol content of wines", TRENDS IN FOOD SCIENCE AND TECHNOLOGY, ELSEVIER SCIENCE PUBLISHERS, GB, Bd. 29, Nr. 1, 5. Juli 2012 (2012-07-05), Seiten 55-61, XP028975098, ISSN: 0924-2244, DOI: 10.1016/J.TIFS.2012.06.015
- QUIRÓS MANUEL ET AL: "Selection of non-Saccharomycesyeast strains for reducing alcohol levels in wine by sugar respiration", INTERNATIONAL JOURNAL OF FOOD MICROBIOLOGY, Bd. 181, 29. April 2014 (2014-04-29), Seiten 85-91, XP029026923, ISSN: 0168-1605, DOI: 10.1016/J.IJFOODMICRO.2014.04.024

## Beschreibung

Die Erfindung betrifft ein Nachbehandlungsverfahren zur Entfernung von Ethanol aus einem handelsfertigen alkoholhaltigen Gärprodukt wie Bier, Wein oder Kombucha, mit dem der Ethanolgehalt des Gärproduktes nachträglich durch die Nutzung von hefespezifischen Stoffwechselaktivitäten ausgewählter Hefestämme reduziert wird. Alkoholfreie Getränke, die den alkoholhaltigen Varianten im Geschmack ebenbürtig sind, werden zunehmend im Handel nachgefragt. Insbesondere in Ländern, in denen der Genuss von Alkohol aus religiösen oder traditionellen Gründen untersagt ist, steigt die Nachfrage nach absolut alkoholfreien Bieren oder Weinen.

Die Industrie unterscheidet zwei Hauptmethoden, durch die ursprünglich alkoholhaltige Getränke alkoholfrei im Handel angeboten werden können.

Die erste Methode sieht vor, von vornherein die Alkoholbildung während des Herstellungsprozesses zu drosseln oder zu unterbinden, was in der Regel aber zu alkoholfreien Getränken führt, die nur näherungsweise über das Aroma ihrer alkoholhaltigen Äquivalente verfügen.

Die zweite Methode sieht vor, den Alkohol nachträglich zu entfernen. Nachstehender Stand der Technik beschreibt Verfahren, die eine Ethanolentfernung durch Verstoffwechselung des Ethanols bei Bier oder Wein durch Hefen offenbaren: Sohrabvandi et al. (Sohrabvandi, Sarah, et al. "Application of Saccharomyces rouxii for the production of non-alcoholic beer." Food Science and Biotechnology 18.5 (2009): 1132-1137.) beschreiben ein Ethanolentfernungsverfahren, bei dem einer mit *Saccharomyces cerevisiae* angegorenen Würze mit einem Ethanolgehalt von 1,5 %vol nach der Inaktivierung der *S. cerevisiae* die Hefe *Saccharomyces rouxii* zugesetzt wird. Anschließend wird unter aeroben Bedingungen bei periodischer Belüftung der Ethanol der angegorenen und noch zuckerhaltigen Würze verstoffwechselt, was zu einer Reduzierung des Ethanolgehaltes führt.

Die EP 0 245 845 B1 offenbart ebenfalls die Verwendung von *Saccharomyces-*Hefen, insbesondere der Hefen *S. rouxii* DSM 2531 und 70535, zur Entfernung von Ethanol aus Bieren.

Die WO2017/115156 lehrt auch ein Verfahren zur Herstellung von alkoholischen Getränken mit einem geringerem Alkoholgehalt, wobei zunächst Most mit Nicht-Saccharomyces-Hefen (z. B. Pichia anomala) aerob vergoren wird. Die EP 0 440 975 B1 beschreibt ein Verfahren zur Ethanolentfernung, das Nicht-*Saccharomyces-Hefen* zur Verstoffwechselung des Ethanols einsetzt. Bei dem offenbarten zweistufigen Verfahren wird in einem ersten Verfahrensschritt ein ethanolhaltiges Gärprodukt gebildet, dessen Ethanolgehalt deutlich niedriger als nach einer konventionellen Herstellung ist. In einem zweiten Verfahrensschritt erfolgt der Ethanolabbau unter aeroben Bedingungen und unter Zugabe einer zuckerhaltigen Supplementierung, um das Aromabuketts zu erhalten.

Aufgabe ist es, ein Nachbehandlungsverfahren zur Entfernung von Ethanol aus einem ethanolhaltigem Gärprodukt anzugeben, das bei konventionell hergestellten Gärprodukten, insbesondere bei durch Gärung erhaltenen ethanolhaltigen Getränken, anwendbar ist, ohne dass das Gärprodukt nach der Ethanolentfernung nacharomatisiert werden muss.

Zur Lösung der Aufgabe wird ein Nachbehandlungsverfahren zur Entfernung von Ethanol aus einem alkoholhaltigen Gärprodukt, das den nach dem vollständigen Durchlaufen des gärproduktspezifischen Herstellungsverfahrens verfahrenstypischen End-Ethanolgehalt aufweist, angegeben, das die Verfahrensschritte aufweist:
a) Zusetzen einer Nicht-*Saccharomyces*-Hefe oder einem Gemisch von Nicht-*Saccharomyces*-Hefen zum alkoholhaltigen Gärprodukt und
b) Durchführung einer aeroben Fermentation des alkoholhaltigen Gärprodukts unter sauerstofflimitierten Bedingungen und ohne weitere Supplementierung mit zuckerhaltigen Medien, bei der der im alkoholhaltigen Gärprodukt enthaltene Ethanol durch die Nicht-*Saccharomyces-Hefen* abgebaut und unter Bildung von für das Gärprodukt typischer Aromastoffe verstoffwechselt wird.

Ein alkoholhaltiges Gärprodukt ist insbesondere ein alkoholhaltiges Getränk wie ein nach einem herkömmlichen Brauverfahren hergestelltes Bier oder ein die Lagerung durchlaufender Wein oder Schaumwein. Desweiteren ist das Nachbehandlungsverfahren bei Kombucha oder anderweitigen, vorteilhafterweise flüssigen, alkoholhaltigen Lebensmitteln einsetzbar.

Bei den für das Nachbehandlungsverfahren geeigneten Nicht-*Saccharomyces*-Hefen handelt es sich insbesondere um Hefen der Stämme "*Candida utilis*, *Hansenula*/*Pichia anomala*, *Pichia cactophila*, *Saccharomycodes ludwigii*, *Kluyveromyces marxianus*, *Brettanomyces bruxellensis*".

Neben dem Einsatz von reinen Stämmen von Nicht-*Saccharomyces*-Hefen können auch Gemische von Nicht-*Saccharomyces*-Hefen unterschiedlicher Stämme für den Ethanolabbau eingesetzt werden.

Die benannten Nicht-*Saccharomyces*-Hefen sind unter den Bedingungen des erfindungsgemäßen Nachbehandlungsverfahrens in der Lage, Ethanol als Kohlenstoffquelle zu nutzen, wobei neben Zellmasse auch sekundäre Stoffwechselprodukte wie höhere Alkohole und Ester, die wichtige Aromakomponenten in Bier und Wein darstellen, gebildet werden.

Vorteilhaft am erfindungsgemäßen Verfahren ist, dass der Ethanolabbau in alkoholhaltigen Gärprodukten vollzogen werden kann, die bereits vollausgereift sind und auch die Lagerung durchlaufen haben. Insbesondere können herkömmlich hergestellte Biere, Weine oder auch Kombucha fermentativ nachbehandelt werden und so als alkoholfreie Produkte in den Handel gebracht werden.

Das beanspruchte Nachbehandlungsverfahren zeichnet sich dadurch aus, dass alkoholfreie Gärprodukte, insbesondere alkoholfreie Getränke, hergestellt werden können, in denen der Ethanolgehalt derart stark reduziert ist, dass diese Produkte auch sehr strengen Anforderungen nationaler Getränkeverordnungen z.B. auch der des Nahen Ostens genügen.

Zusätzlich zu der beschriebenen Anwendung bei den genannten, den Herstellungsprozess vollständig durchlaufenden und vollausgereiften alkoholhaltigen Gärprodukten oder Getränken kann das erfindungsgemäße Nachbehandlungsverfahren auch bei nichtfertigen Gärprodukten wie beispielsweise Jungbieren oder jungem Wein angewandt werden.

Bei Jungbier und jungem Wein bietet das erfindungsgemäße Nachbehandlungsverfahren den Vorteil, dass die Begasung mit sauerstoffhaltigem Gas während des Ethanolabbaus durch die zugesetzten Nicht-*Saccharomyces-*Hefen die Lagerung ersetzt und zudem eine Reifung herbeiführt.

Positiv auf den Ethanolabbau durch Nicht-*Saccharomyces*-Hefen wirkt sich aus, die aerobe Fermentation bei einem konstant gehaltenen Sauerstoffpartialdruck von 5-20 % pO₂, insbesondere mit einem Sauerstoffpartialdruck von 10 % pO₂, durchzuführen.

Die Begasung kann mit einem sauerstoffhaltigen Gas oder mit reinem Sauerstoff erfolgen, bevorzugt mit einem Volumenstrom, der zwischen 0,0 vvm - 0,1 vvm variiert werden kann (vvm: Begasungseinheit, "Vessel Volumen pro Minute", Volumen Gas pro Volumen Kulturmedium pro Minute).

In einer Verfahrensvariante des Nachbehandlungsverfahrens kann die Begasung mit einem sauerstoffhaltigen Gas oder mit reinem Sauerstoff gepulst erfolgen.

Ein weiterer vorteilhafter Prozessparameter besteht darin, die aerobe Fermentation bei einer Temperatur von 20°C - 30°C durchzuführen.

Nachstehend wird das Verfahren anhand von Verfahrensbeispielen und Versuchsergebnissen näher erläutert.

### Beispiel 1:

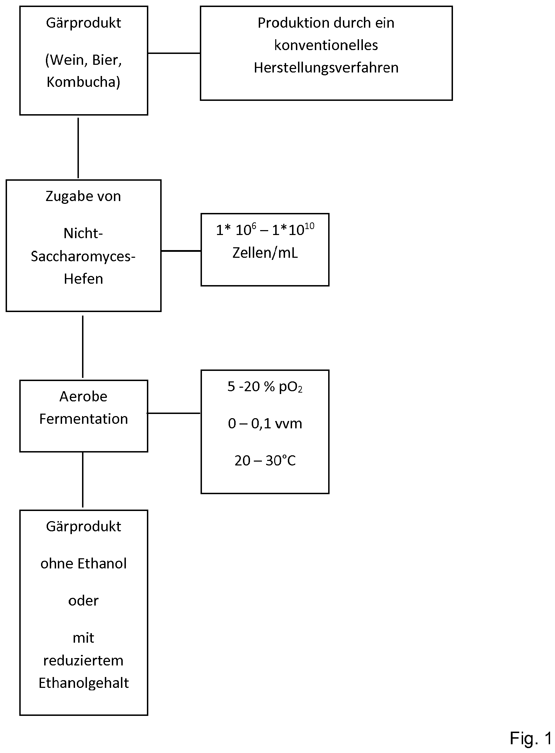

Die Figur 1 gibt eine schematische Darstellung einiger Prozessparameter des beanspruchten Nachbehandlungsverfahrens wieder.

Die als Substrat dienenden konventionell hergestellten Gärprodukte weisen nach dem vollständigen Durchlaufen ihres gärproduktspezifischen Herstellungsverfahrens im Durchschnitt einen verfahrenstypischen End-Ethanolgehalt von
5 - 7,5 %vol. für Bier,
10 - 15 %vol. für Wein und
≤0,5 %vol. für Kombucha
auf.

Das als Substrat dienende Gärprodukt wird steril unter Stickstoff in einen Fermenter überführt. Der Sauerstoffpartialdruck (pO₂) wird dann auf 10 % mittels synthetischer Luft, welche über eine geeignete Begasungseinheit steril und unter Rühren in das Substrat eingetragen wird, eingestellt. Gleichzeitig erfolgt die Temperierung des Substrats auf eine Temperatur, bei der die für den Ethanolabbau ausgewählte Nicht-Saccharomyces-Hefe ihre optimalen Stoffwechseleigenschaften zeigt.

Ist der pO₂ eingestellt und die gewünschte Fermentationstemperatur erreicht, wird die Hefe über einen sterilen Port in den Fermenter gegeben. Die Zellkonzentration im Substrat beträgt vorteilhafterweise 1*10⁷ Zellen/mL. Als Animpfkonzentrationen können aber auch andere Zellkonzentrationen erforderlich sein.

Die Anzucht der Hefen als Vorkultur erfolgt ebenfalls im gleichen Substrat wie die Hauptfermentation, allerdings ohne eine Sauerstofflimitierung.

Nach Zugabe der Nicht-*Saccharomyces*-Hefen beginnt der Entalkoholisierungsprozess. Während des Ethanolabbaus aufgrund von Stoffwechselaktivitäten der Nicht-*Saccharomyces*-Hefe wird der Sauerstoffpatialdruck pO₂ über einen PID-Regler konstant bei 10 % gehalten.

Durch den benannten Sauerstoffpartialdruck wird ein negativer Effekt des Sauerstoffs auf das Endprodukt minimiert. Trotz des geringen Sauerstoffpartialdruckes bedingt der verfügbare Sauerstoff, dass die Nicht-*Saccharomyces*-Hefen ausreichend den Ethanol unter Sauerstoffverbrauch verstoffwechseln und darauf basierende aromaaktive Substanzen bilden.

Die beanspruchte Gelöstsauerstoffkonzentration im Substrat führt neben dem Ethanolabbau zu einer Neubildung aromaaktiver Substanzen durch die Nicht-*Saccharomyces-Hefen.* Dieses Verhalten bietet den einzigartigen Effekt, dass dem etwaigen Verlust durch nicht vollständig zu unterbindendes Stripping entgegen gewirkt wird, und ein aromatisches Produkt gewonnen wird, das dem Ausgangsprodukt geschmacklich nicht nachsteht.

Unter den dargestellten Bedingungen ist ein Stripping des Ethanols nahezu unterbunden, sodass der Ethanolabbau im Gärprodukt im Wesentlichen vollständig auf die Aktivität der Hefen zurück zu führen ist. Oxidationsprozesse, welche im Gärprodukt aufgrund des gelösten Sauerstoffs induziert werden können, werden dadurch minimiert, dass der Sauerstoffgehalt limitiert gehalten wird, sodass der Sauerstoffverbrauch durch die Stoffwechselaktivitäten der Nicht-*Saccharomyces-*Hefen einer unerwünschten Oxidation von Bestandteilen des Gärprodukt entgegenwirkt bzw. diese verhindert.

Das Nachbehandlungsverfahren kann unter folgenden Begasungsstrategien und Folgereglern geführt werden:

### Beispiel 2:

Die Begasung erfolgt zunächst mit Luft in Abhängigkeit des Sauerstoffbedarfs der Nicht-*Saccharomyces*-Hefen. Beispielsweise mit 0,0 vvm, wenn keine Änderung des pO₂ stattfindet und mit maximal 0,1 vvm bei hohem Sauerstoffbedarf. Sinkt der pO₂ unter einen Wert von 10 %, kann zunächst die Rührergeschwindigkeit erhöht werden, um eine bessere Verteilung der Luftblasen im Substrat zu erreichen. Erreicht der Rührer seine maximale Leistung, kann sukzessive reiner Sauerstoff über ein Ventil zudosiert werden.

### Beispiel 3:

Die Begasung erfolgt gepulst, d.h. der Luft-Volumenstrom variiert zeitabhängig, beispielsweise steigt der Luft-Volumenstrom innerhalb einer Stunde von 0,0 vvm auf 0,1 vvm an und umgekehrt in der nächsten Stunde. Bei erhöhtem Sauerstoffbedarf der Nicht-*Saccharomyces*-Hefen, der gekennzeichnet ist durch einen Abfall des pO₂ bei fehlender Gegensteuerung, kann wiederum die Rührergeschwindigkeit erhöht sowie Sauerstoff über ein Ventil zudosiert werden.

Bei der Regelung der Sauerstoffzufuhr über einen konstanten pO₂ findet im Gegensatz zu einer Regelung über eine konstante Begasungsrate der Metabolismus der Hefen Berücksichtigung, wodurch durchgängig eine ausreichende Sauerstoffversorgung der Hefen gewährleistet ist.

### Beispiel 4:

Der Abbau des Ethanols kann über einen Ethanolsensor verfolgt werden, sodass online der Ethanolgehalt des Substrats erfasst werden kann. Dies ermöglicht, den Prozess bei einem definierten Ethanolgehalt zu beenden.

Als weiterer Indikator des Abbaugrades kann der Sauerstoffbedarf der Nicht-*Saccharomyces-Hefen* herangezogen werden. Ein Indiz für den vollständigen Ethanolabbau besteht darin, dass der Sauerstoffbedarf der Hefen wieder sinkt, d.h. wenn die Folgeregler wieder in ihren Urzustand zurückkehren.

Ist ein Ethanolgehalt von 0,0 %vol. angestrebt, ist das Absinken des Sauerstoffbedarfs ein deutliches Zeichen, dass die Nicht-*Saccharomyces*-Hefen den Ethanol verstoffwechselt haben.

Zum Abschluss des erfindungsgemäßen Nachbehandlungsverfahrens wird das vom Ethanol befreite Produkt filtriert und abgefüllt.

### Beispiel 5:

Die Anzucht der Nicht-*Saccharomyces*-Hefe erfolgt in einem zweistufigen Verfahren.

Der erste Schritt der Vorkultivierung erfolgt in einem zuckerfreien Medium mit Ethanol als C-Quelle (5 %vol.) und Hefeextrakt (1 % (w/v)).

Im zweiten Schritt der Vorkultivierung wird die Nicht-*Saccharomyces*-Hefe im Zielsubstrat kultiviert, z.B. in einem Bier mit einem Ethanolgehalt von 5 %vol., wenn die Nicht-*Saccharomyces*-Hefe eingesetzt werden soll, um ein konventionell hergestelltes Bier der ethanolabbauenden Nachbehandlung zu unterziehen.

Der zweite Kultivierungsschritt erfolgt über eine Dauer von 24 h mit einer Animpfkonzentration von 1 * 10⁷ Zellen/mL mit dem Zweck, die Nicht-*Saccharomyces-Hefe* an das nachzubehandelnde Getränk zu adaptieren, wodurch ein schnelleres Anwachsen der Nicht-*Saccharomyces*-Hefe im Fermentationsprozess sichergestellt wird.

Bereits die Vorkultivierung erfolgt auf Medien, die keinen Zucker enthalten, wodurch die Stoffwechselaktivität der Nicht-*Saccharomyces*-Hefe auf die Verstoffwechselung des Ethanols programmiert wird.

Die Dauer des Entalkoholisierungsprozesses ist abhängig vom gewählten Hefe-Stamm und den verwendeten Regelungsparametern (5 - 20 % pO₂; 20 - 30 °C). Das Ende des Prozesses ist erreicht, wenn der Ethanolgehalt auf einen Gehalt von 0,0 %vol. reduziert wurde. Die übliche Prozessdauer liegt zwischen drei und fünf Tagen.

### Beispiel 6:

Die ausgewählten Stämme
- *Candida utilis*
- *Hansenula*/*Pichia anomala*
- *Pichia cactophila*
- *Saccharomycodes ludwigii*
- *Kluyveromyces marxianus*
- *Brettanomyces bruxellensis*
aus der Gruppe der Nicht-*Saccharomyces*-Hefen zeigen bei Ethanolgehalten bis 10 % vol. ein deutliches Wachstum in zuckerfreiem Medium mit Ethanol als alleinige C-Quelle.

Bei allen Stämmen kann eine Bildung hefetypischer Aromen nachgewiesen werden. Eine allgemeine Gruppierung oder Abgrenzung der Stämme aufgrund spezifischer Stoffwechselleistungen ist nicht möglich.

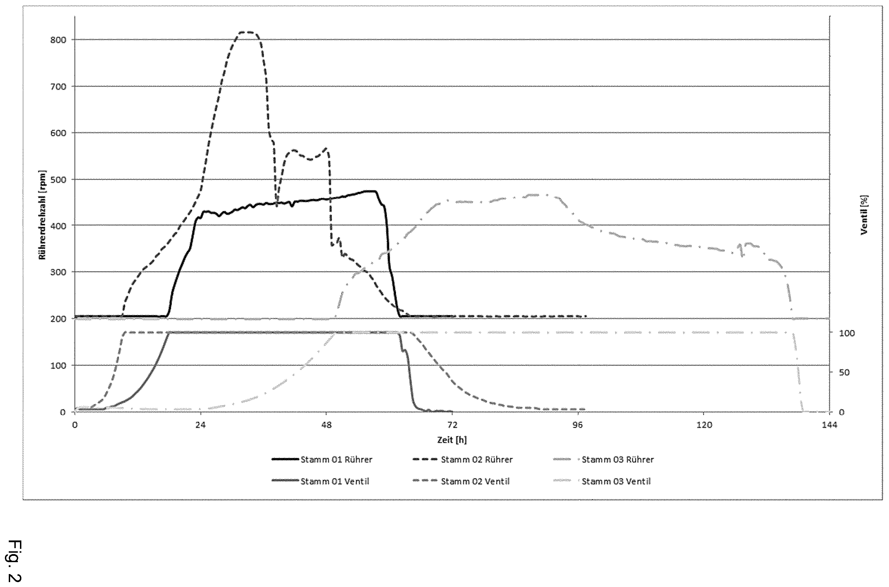

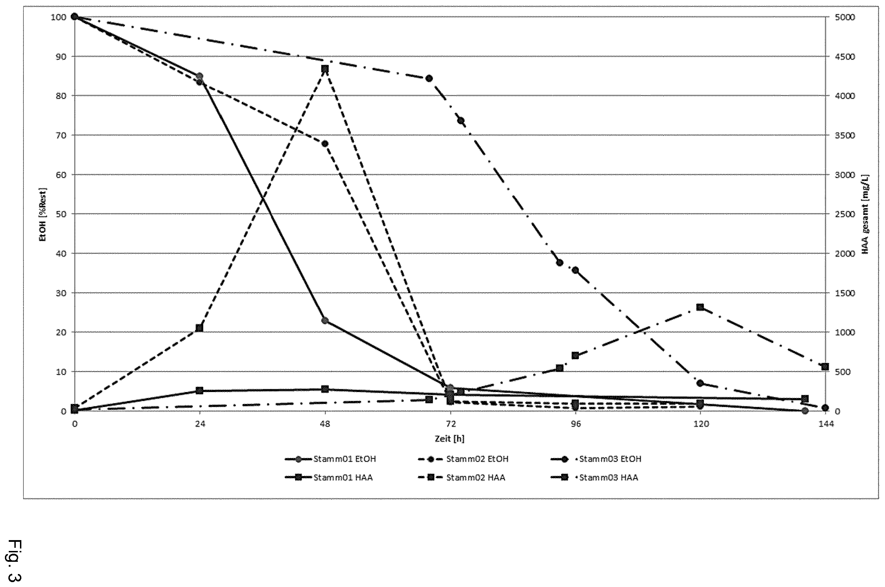

Die Figuren 2 und 3 zeigen beispielhaft zwei Fermentationsverläufe bei einem Sauerstoffpartialdruck von 10% pO₂ und einer Temperatur von30 °C.

### Beispiel 7:

Das Diagramm der Figur 2 zeigt ein Fermentationsprofil für den Stamm 01 "*P. cactophila*", den Stamm 02 *"H. anomala"* und den Stamm 03 "*S*. *ludwigii*" bei 30 °C und einem konstanten pO₂ von 10 % in Vollmedium mit 5 %vol Ethanol als alleinige C-Quelle.

Die Begasung erfolgte mit synthetischer Luft bei maximal 0,1 vvm. Dargestellt sind zusätzlich die Ventilöffnung für die Luft-Zufuhr sowie die Rührergeschwindigkeit. Letztere wurden in Abhängigkeit vom Sauerstoffpartialdruck geregelt.

### Beispiel 8:

Das Diagramm der Figur 3 zeigt die Ethanolabnahmen sowie die ermittelte Konzentration aromaaktiver Substanzen (HAA; höhere Alkohole und Ester) dreier Fermentationen.

Dargestellt sind die Ethanolabnahme (runde Markierung) sowie die Bildung höherer Alkohole und Ester (eckige Markierung) des Stammes 01 *"P. cactophila",* des Stammes 02 "*H. anomala*" und des Stammes 03 "*S*. *ludwigii*" in Vollmedium mit 5 %vol Ethanol als alleinige C-Quelle bei 10 % pO₂ (konst.) und 30 °C.

## Patentansprüche

1. Verfahren zur Entfernung von Ethanol aus einem alkoholhaltigen Gärprodukt, das den nach dem vollständigen Durchlaufen des gärproduktspezifischen Herstellungsverfahrens verfahrenstypischen End-Ethanolgehalt aufweist, aufweisend die Verfahrensschritte:
a) Zusetzen einer Nicht-*Saccharomyces*-Hefe oder eines Gemischs von Nicht-*Saccharomyces*-Hefen zu dem alkoholhaltigen Gärprodukt, und
b) aerobe Fermentation des alkoholhaltigen Gärprodukts unter sauerstofflimitierten Bedingungen und
ohne weitere Supplementierung mit zuckerhaltigen Medien,
bei der der im alkoholhaltigen Gärprodukt enthaltene Ethanol durch die Nicht-*Saccharomyces*-Hefen abgebaut und unter Bildung von für das Gärprodukt typischen Aromastoffen verstoffwechselt wird.

2. Verfahren nach Anspruch 1, **dadurch gekennzeichnet, dass** das Gärprodukt ein durch Lagerung ausgereiftes alkoholhaltiges Getränk ist.

3. Verfahren nach Anspruch 1 oder 2, **dadurch gekennzeichnet, dass** das Gärprodukt ein Getränk ist, das ausgewählt ist aus der Gruppe bestehend aus Bier, Wein und Kombucha.

4. Verfahren nach einem der Ansprüche 1 bis 3, **dadurch gekennzeichnet, dass** die aerobe Fermentation bei einem konstant gehaltenen Sauerstoffpartialdruck von 5 % bis 20 % pO₂ durchgeführt wird.

5. Verfahren nach Anspruch 4, **dadurch gekennzeichnet, dass** die aerobe Fermentation bei einem konstant gehaltenen Sauerstoffpartialdruck von 10 % pO₂ durchgeführt wird.

6. Verfahren nach einem der Ansprüche 1 bis 5, **dadurch gekennzeichnet, dass** die Begasung mit einem sauerstoffhaltigen Gas gepulst erfolgt.

7. Verfahren nach einem der Ansprüche 1 bis 6, **dadurch gekennzeichnet, dass** die Begasung mit einem sauerstoffhaltigen Gas mit einem Volumenstrom von 0,0 vvm bis 0,1 vvm geführt wird.

8. Verfahren nach einem der Ansprüche 1 bis 7, **dadurch gekennzeichnet, dass** die Begasung mit reinem Sauerstoff erfolgt.

9. Verfahren nach einem der Ansprüche 1 bis 8, **dadurch gekennzeichnet, dass** die aerobe Fermentation bei einer Temperatur von 20 °C bis 30 °C geführt wird.

10. Verfahren nach einem der Ansprüche 1 bis 9, **dadurch gekennzeichnet, dass** die Nicht-*Saccharomyces*-Hefe oder das Gemisch von Nicht-*Saccharomyces-*Hefen ausgewählt ist aus der Gruppe der Nicht-*Saccharomyces*-Hefen bestehend aus *Candida utilis*, *Hansenula*/*Pichia anomala*, *Pichia cactophila*, *Saccharomycodes ludwigii*, *Kluyveromyces marxianus* und *Brettanomyces bruxellensis*.

## Claims

1. Method for removing ethanol from an alcohol containing fermentation product which, after completely running through a production method specific for the fermentation product, contains a final concentration of ethanol typical for the production method, comprising the steps:
a) Adding a non-saccharomyces yeast or a mixture of non-saccharomyces yeasts to the alcohol containing fermentation product, and
b) aerobic fermentation of the alcohol containing fermentation product under oxygen restricted conditions and without further supplementing with sugar containing media,
wherein the ethanol contained in the alcohol containing fermentation product is reduced by the non- saccharomyces yeasts and metabolized under the formation of aromatic substances specific for the fermentation product.

2. Method according to claim 1, **characterized in that** the fermentation product is an alcohol containing beverage matured through storage.

3. Method according to claim 1 or 2, **characterized in that** that the fermentation product is a beverage which is selected form the group consisting of beer, wine and Kombucha.

4. Method according to one of claims 1 to 3, characterized that the aerobic fermentation is performed at a constant oxygen partial pressure of 5% to 20% pO2.

5. Method according to claim 4, characterized that the aerobic fermentation is performed at a constant oxygen partial pressure of 10% pO2.

6. Method according to one of claims 1 to 5, **characterized in that** the gassing performed is pulsed with an oxygen containing gas.

7. Method according to one of claims 1 to 6, **characterized in that** the gassing is performed with an oxygen containing gas at a volume flow of 0.0 vvm to 0.1 vvm.

8. Method according to one of claims 1 to 7, **characterized in that** the gassing is performed with pure oxygen.

9. Method according to one of claims 1 to 8, **characterized in that** the aerobic fermentation is performed at a temperature of 20 °C to 30 °C.

10. Method according to one of claims 1 to 9, **characterized in that** the non-saccharomyces yeast or the mixture of non-saccharomyces yeasts is selected from the group of non-saccharomyces yeasts consisting of *Candida utilis*, *Hansenula*/*Pichia anomala*, *Pichia cactophila*, *Saccharomycodes ludwigii*, *Kluyveromyces marxianus*, and *Brettanomyces bruxellensis*.

## Revendications

1. Procédé pour l'élimination d'éthanol à partir d'un produit de fermentation contenant de l'alcool, qui présente la teneur en éthanol finale caractéristique du procédé après le processus complet du procédé de préparation spécifique au produit de fermentation, présentant les étapes de procédé :
a) ajout d'une levure n'étant pas du type *Saccharomyces* ou d'un mélange de levures n'étant pas du type *Saccharomyces* au produit de fermentation contenant de l'alcool, et
b) fermentation aérobe du produit de fermentation contenant de l'alcool dans des conditions limitées en oxygène et
sans autre supplémentation avec des milieux contenant du sucre,
lors de laquelle l'éthanol contenu dans le produit de fermentation contenant de l'alcool est dégradé par les levures n'étant pas du type *Saccharomyces* et est métabolisé avec formation de substances aromatisantes caractéristiques pour le produit de fermentation.

2. Procédé selon la revendication 1, **caractérisé en ce que** le produit de fermentation est une boisson contenant de l'alcool arrivée à maturité par stockage.

3. Procédé selon la revendication 1 ou 2, **caractérisé en ce que** le produit de fermentation est une boisson qui est choisie dans le groupe constitué par la bière, le vin et le kombucha.

4. Procédé selon l'une quelconque des revendications 1 à 3, **caractérisé en ce que** la fermentation aérobe est mise en œuvre à une pression partielle d'oxygène maintenue constante de 5 % à 20 % pO₂.

5. Procédé selon la revendication 4, **caractérisé en ce que** la fermentation aérobe est mise en œuvre à une pression partielle d'oxygène maintenue constante de 10 % pO₂.

6. Procédé selon l'une quelconque des revendications 1 à 5, **caractérisé en ce que** le gazage est réalisé de manière pulsée avec un gaz contenant de l'oxygène.

7. Procédé selon l'une quelconque des revendications 1 à 6, **caractérisé en ce que** le gazage est conduit avec un gaz contenant de l'oxygène avec un débit volumique de 0,0 vvm à 0,1 vvm.

8. Procédé selon l'une quelconque des revendications 1 à 7, **caractérisé en ce que** le gazage est réalisé avec de l'oxygène pur.

9. Procédé selon l'une quelconque des revendications 1 à 8, **caractérisé en ce que** la fermentation aérobe est conduite à une température de 20 °C à 30 °C.

10. Procédé selon l'une quelconque des revendications 1 à 9, **caractérisé en ce que** la levure n'étant pas du type *Saccharomyces* ou le mélange de levures n'étant pas du type *Saccharomyces* est choisi(e) dans le groupe des levures n'étant pas du type *Saccharomyces* constitué par *Candida utilis*, *Hansenula*/*Pichia anomala*, *Pichia cactophila*, *Saccharomycodes ludwigii*, *Kluyveromyces marxianus* et *Brettanomyces bruxellensis*.
